# EUROPÄISCHE PATENTANMELDUNG

(11) **EP 3 143 873 A1**
(43) Veröffentlichungstag der Anmeldung: **22.03.2017**
(21) Anmeldenummer: 16401054.8
(22) Anmeldetag: 05.09.2016
(51) Int. Cl.: A01M 7/00, B65D 41/04

(54) **SCHRAUBVERBINDUNG**

(30) Priorität: 15.09.2015 DE 102015115492
(71) Anmelder: Amazonen-Werke H. Dreyer GmbH & Co. KG, 49205 Hasbergen (DE)
(72) Erfinder: Wolf, Jan, 49078 Osnabrück (DE)

(57) **Zusammenfassung**

Schraubverbindung zwischen einem Verschlussdeckel und einer Behälteröffnung mittels welcher der Verschlussdeckel in die Behälteröffnung einschraubbar ist, wobei der Verschlussdeckel ein Außengewinde und die Behälteröffnung ein Innengewinde jeweils gleicher Gewindesteigung aufweisen. Um eine Schraubverbindung vorzuschlagen, die sich durch eine geringe Reibung beim Hereinschrauben des Verschlussdeckels in die Behälteröffnung auszeichnet und deren Funktionsfähigkeit auch nicht durch stärkere Verschmutzung und den rauen Betrieb in der Landwirtschaft beeinträchtigt wird, ist vorgesehen, dass die Außengewindegänge und die Innengewindegänge in ihrem Profil unterschiedlich ausgebildet sind.

## Beschreibung

Die Erfindung betrifft eine Schraubverbindung gemäß des Oberbegriffes des Patentanspruches 1.

Derartige Schraubverbindungen sind in einer Vielzahl von Ausführungsformen in der Praxis bekannt. Üblicherweise sind bei diesen Schraubverbindungen die Gewinde von Verschlussdeckel und Behälteröffnung passgenau entsprechend den gängigen internationalen Normen aufeinander abgestimmt ausgestaltet. Bei dieser passgenauen Ausgestaltung von Innengewinde zu Außengewinde tritt in der Praxis eine hohe Reibung beim herein- und herausschrauben von Verschlussdeckel gegenüber der Behälteröffnung auf. Dies wird noch dadurch verstärkt, dass die Gewinde in der Praxis stark durch die Spritzbrühe, insbesondere in der Landwirtschaft, verschmutzt werden. Hierdurch kommt es zu Ablagerungen in den Gewindefängen. Auch kann es aufgrund der passgenauen Ausgestaltung unter den rauen Bedingungen in der Landwirtschaft zu Beschädigungen an dem Gewinde kommen, die dieses unbrauchbar und damit den zu verschließenden Behälter undicht werden lassen.

Der Erfindung liegt die Aufgabe zu Grunde, eine Schraubverbindung vorzuschlagen, die sich durch eine geringe Reibung beim Hereinschrauben des Verschlussdeckels in die Behälteröffnung auszeichnet und deren Funktionsfähigkeit auch nicht durch stärkere Verschmutzung und den rauen Betrieb in der Landwirtschaft beeinträchtigt wird.

Diese Aufgabe der erfindungsgemäß dadurch gelöst, dass die Außengewindegänge und die Innengewindegänge in ihrem Profil unterschiedlich ausgebildet sind.

Infolge dieser Maßnahme wird die Grundvoraussetzung eines ausreichenden Freiraumes des Innengewindeprofils zu dem Außengewindeprofil geschaffen, damit eine robuste Gewindeverbindung zwischen Verschlussdeckel und Behälteröffnung entsteht. Somit lässt sich der Verschlussdeckel leicht in die Behälteröffnung auch bei starker Verschmutzung einschrauben. Hierbei ist vorteilhaft, dass das Innengewindeprofil größer als das Außengewindeprofil ausgebildet ist. Somit ergibt sich eine ausreichend hohe Bewegungsfreiheit des Behälterdeckels zu der Behälteröffnung. Auch kann der Verschlussdeckel sehr leicht in die Behälteröffnung eingeschraubt werden.

Dies wird in einer Ausführungsform dadurch verwirklicht, dass die Innengewindegänge in der Behälteröffnung eine wesentlich größere Profilbreitenhöhe als die Außengewindegänge des Verschlussdeckels aufweisen.

Die erfindungsgemäße Gewindeverbindung zwischen Verschlussdeckel und Behälteröffnung zeichnet sich in einer bevorzugten Ausgestaltung dadurch aus, dass das Innengewindeprofil in seinem größten Durchmesserbereich einen abgerundeten umlaufenden Zylinderbereich aufweist, dass das Außengewindeprofil hingegen schmalstegig ausgebildet ist. Hierdurch wird in einfacher Weise die erfindungsgemäße große vorteilhafte Bewegungsfreiheit der Gewindeverbindung zwischen Verschlussdeckel und Behälteröffnung erreicht.

In einer bevorzugten Ausführungsform ist vorgesehen, dass die Gewindeflanken des Außengewindes des Verschlussdeckels zumindest eine Aussparung aufweisen. Infolge dieser Maßnahme können sich in dem Gewinde festgesetzte oder anhaftende Schmutzpartikel in einfacher Weise aus den Gewindegängen heraus transportiert werden. Somit findet eine Selbstreinigung des Gewindes statt. Durch diese Aussparungen kann die in dem Gewindeprofil vorhandene Schmutzpartikel mitgeführt und entfernt werden.

Eine vorteilhafte Abdichtung des Verschlussdeckels gegenüber der Behälteröffnung lässt sich dadurch verwirklichen, dass der Verschlussdeckel unterhalb des Gewindeprofils eine Zylinder förmige Verlängerung aufweist, dass in der zylinderförmigen Verlängerung zumindest eine Nut angeordnet ist, dass in der Nut eine Ringdichtung angeordnet ist.

Eine weitere zusätzliche Abdichtung des Verschlussdeckels zu der Behälteröffnung kann dadurch erreicht werden, dass der Verschlussdeckel in seinem oberen Bereich oberhalb des Gewindeprofils eine umlaufende ringförmige Verbreiterung aufweist, dass auf dem zylinderförmigen Bereich des Verschlussdeckels eine auf der Unterseite in Richtung des Gewindeprofils an der ringförmigen Verbreiterung anliegende Dichtung angeordnet ist. Nach dem völligen Hineinschrauben des Verschlussdeckels in die Behälteröffnung wird durch die Dichtung zwischen der ringförmigen Verbreiterung und dem oberen Rand der Behälteröffnung eine Abdichtung erreicht.

Somit lässt sich eine gute Abdichtung von Verschlussdeckel zu der Behälteröffnung trotz der ungleichen Gewindeprofile, jedoch gleicher Gewindesteigung und der Freiräume in der Gewindeverbindung erreichen.

Über die vor beschriebenen Vorteile der erfindungsgemäßen Ausgestaltung der Gewindeverbindung hinaus, lassen sich sowohl das Innengewinde in der Behälteröffnung mit den hohen Gewindeflanken bei einem Kunststoffbehälter besonders gut in einem Rotationsverfahren als auch das Außengewinde des aus einem Kunststoffmaterial hergestellten Verschlussdeckels in einen Spritzgussverfahren sehr gut herstellen. Außerdem bewirkt die erfindungsgemäße Ausgestaltung des Gewindes, dass insbesondere das in der Behälteröffnung angeordnete Innengewinde besonders langlebig ist, da es nicht so leicht durch falsches einschrauben des Verschlussdeckel oder durch Einwirkung von Schmutz kaputt geht.

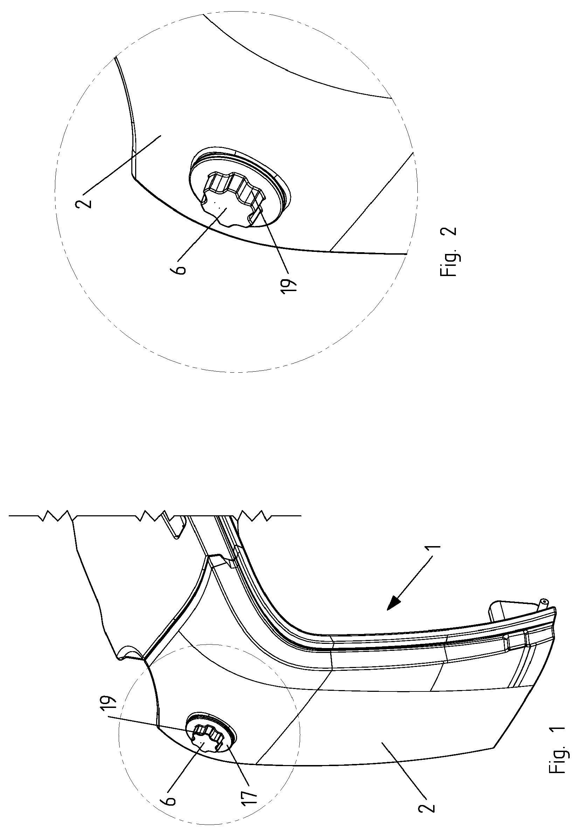

Weitere Einzelheiten der Erfindung sind der Beispielsbeschreibung und den Zeichnungen zu entnehmen. Die Zeichnungen zeigen
- Fig.1: einen Ausschnitt einer Behälterwand mit in einer in der Behälterwand angeordneten Behälteröffnung eingeschraubte Verschlussdeckel in perspektivischer Ansicht,
- Fig.2: der gemäß Fig.1 in die Behälteröffnung eingeschraubte Verschlussdeckel in vergrößerter Darstellung und gleicher Darstellungsweise,

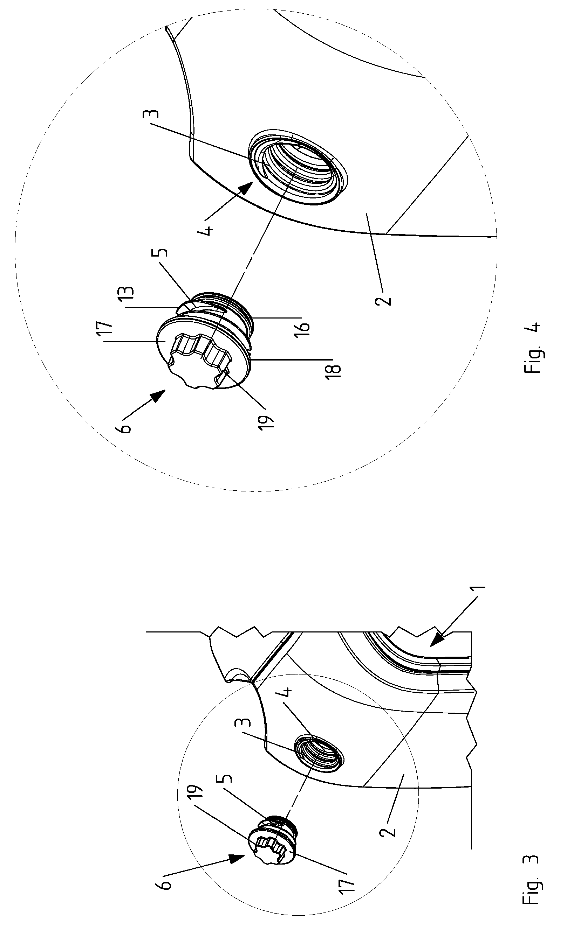

- Fig.3: die Zuordnung von Verschlussdeckel und Behälteröffnung in Explosionsdarstellung und perspektivischer Ansicht,
- Fig.4: die Zuordnung von Verschlussdeckel und Behälteröffnung in der Darstellungsweise gemäß Fig.3, jedoch im vergrößerten Maßstab,

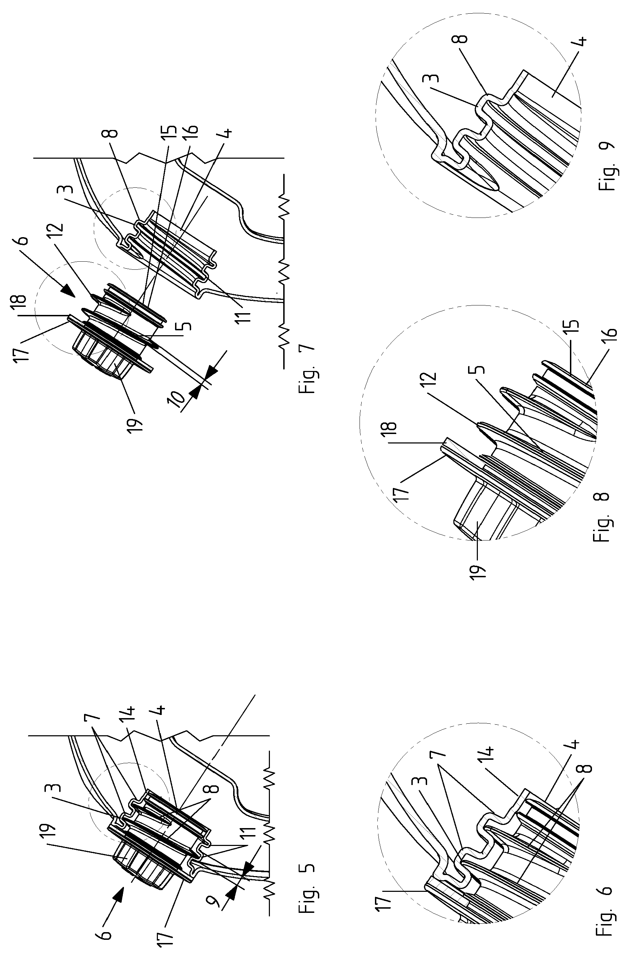

- Fig.5: die Zuordnung von in die Behälteröffnung eingeschraubtem Verschlussdeckel im Schnitt,
- Fig.6: die Darstellung des in die Behälteröffnung eingeschraubten Verschlussdeckels gemäß Fig.5, jedoch im Ausschnitt und vergrößertem Maßstab,
- Fig.7: die Zuordnung von Verschlussdeckel und Behälteröffnung in Explosionsdarstellung und in Seitenansicht, wobei der Behälter mit der Behälteröffnung in Detailansicht und im Schnitt dargestellt ist,
- Fig.8: die Darstellung des Gewindes des Verschlussdeckels gemäß Fig.7, jedoch im Ausschnitt und vergrößertem Maßstab und
- Fig.9: die Darstellung des Gewindes der Behälteröffnung gemäß Fig.7, jedoch im Ausschnitt und vergrößertem Maßstab.

Der nur im Ausschnitt dargestellte Behälter 1 weist in seiner Behälterwand 2 eine mit einem Innengewinde 3 versehene Behälteröffnung 4 auf. In diese Behälteröffnung 4 ist ein mit einem Außengewinde 5 versehener Verschlussdeckel 6 in abdichtender Weise ein zu schrauben. Der Behälter 1 kann zum Beispiel ein Flüssigkeitsbehälter einer landwirtschaftlichen Pflanzenschutzspritze sein. Das Innengewinde 3 der Behälteröffnung 4 und das Außengewinde 5 des Verschlussdeckels 6 weisen jeweils eine gleiche Gewindesteigung auf.

Die Außengewindegänge 7 des Außengewindes 5 und die Innengewindegänge 8 des Innengewindes 3 sind in ihrem Profil unterschiedlich ausgebildet, wie auch die Zeichnungen zeigen. Hierbei ist das in Gewindeprofil des Innengewindes 3 größer als das Gewindeprofil des Außengewindes 5 ausgebildet. Die Innengewindegänge 8 in der Behälteröffnung weisen eine wesentlich größere Profilbreitenhöhe 9 als die Profilbreitenhöhe 10 der Außengewindegänge 5 des Verschlussdeckels 6 auf. Das Innengewindeprofil des Innengewindes 3 weist in seinem größten Durchmesserbereich einen abgerundeten umlaufenden Zylinderbereich 11 auf. Das Außengewindeprofil 12 des Außengewindes 5 hingegen schmalstegig ausgebildet. Aufgrund dieser unterschiedlichen Ausgestaltung des außen Gewindes 5 und es in Gewindes 3 wird eine vorteilhafte Bewegungsfreiheit der Gewindeverbindung zwischen Verschlussdeckel 6 und Behälteröffnung 4 erreicht. Somit kann der Verschlussdeckel 6 leicht und dauerhaft in das Gewinde 3 der Behälteröffnung 4 eingeschraubt werden.

Die Gewindeflanken 12 des Außengewindes 5 des Verschlussdeckels 6 weisen die Aussparungen 12 auf. Durch die Aussparungen 13 können sich in dem Gewinde 5 befindliche Schmutzpartikel in einfacher Weise aus dem Gewindebereich heraus gefördert werden.

Der Verschlussdeckel 6 weist unterhalb des Gewindeprofils des Außengewindes 5 weißt die zylinderförmige Verlängerung 13 auf in dieser zylinderförmigen Verlängerung 14 ist die Nut 15 angeordnet. In dieser Nut 15 ist die umlaufende als Dichtring 16 ausgebildete Ringdichtung angeordnet.

Der Verschlussdeckel 6 weist in seinem oberen Bereich oberhalb des Gewindeprofils eine umlaufende ringförmige Verbreiterung 17 auf. Auf dem zylinderförmigen Bereich des Verschlussdeckels 6 ist eine auf der Unterseite in Richtung des Gewindeprofils 5 an der ringförmigen Verbreiterung 17 anliegende flächige Ringdichtung 18 angeordnet.

Durch die flächige Ringdichtung 18 und den Dichtring 16 wird eine gute Abdichtung der Behälteröffnung 4 gegenüber dem Verschlussdeckel 6 erreicht.

Auf der anderen Seite der ringförmigen Verbreiterung 17 ist der Griffbereich 19 zum Einschrauben des Verschlussdeckels 6 in die Behälteröffnung 4 angeordnet.

## Patentansprüche

1. Schraubverbindung zwischen einem Verschlussdeckel (6) und einer Behälteröffnung (4) mittels welcher der Verschlussdeckel (4) in die Behälteröffnung einschraubbar ist, wobei der Verschlussdeckel (6) ein Außengewinde (5) und die Behälteröffnung (4) ein Innengewinde (3) jeweils mit zumindest annähernd gleicher Gewindesteigung aufweisen, **dadurch gekennzeichnet, dass** die Außengewindegänge (7) und die Innengewindegänge (8) in ihrem Profil unterschiedlich ausgebildet sind.

2. Schraubverbindung nach Anspruch 1, **dadurch gekennzeichnet, dass** das Innengewindeprofil (8) größer als das Außengewindeprofil (7) ausgebildet ist.

3. Schraubverbindung nach zumindest einem der vorstehenden Ansprüche, **dadurch gekennzeichnet, dass** die Innengewindegänge (8) in der Behälteröffnung (4) eine wesentlich größere Profilbreitenhöhe (9) als die Außengewindegänge (7) des Verschlussdeckels (6) aufweisen.

4. Schraubverbindung nach zumindest einem der vorstehenden Ansprüche, **dadurch gekennzeichnet, dass** das Innengewindeprofil (8) in seinem größten Durchmesserbereich einen abgerundeten umlaufenden Zylinderbereich (11) aufweist, dass das Außengewindeprofil (7) hingegen schmalstegig ausgebildet ist.

5. Schraubverbindung nach zumindest einem der vorstehenden Ansprüche, **dadurch gekennzeichnet, dass** die Gewindeflanken des Außengewindes (5) des Verschlussdeckels (6) zumindest eine Aussparung (13) aufweisen.

6. Schraubverbindung nach zumindest einem der vorstehenden Ansprüche, **dadurch gekennzeichnet, dass** der Verschlussdeckel (6) unterhalb des Gewindeprofils (7) eine zylinderförmige Verlängerung aufweist, dass in der zylinderförmigen Verlängerung (14) zumindest eine Nut (15) angeordnet ist, dass in der Nut eine Ringdichtung (16) angeordnet ist.

7. Schraubverbindung nach zumindest einem der vorstehenden Ansprüche, **dadurch gekennzeichnet, dass** der Verschlussdeckel (6) in seinem oberen Bereich oberhalb des Gewindeprofils (5) eine umlaufende ringförmige Verbreiterung aufweist, dass auf dem zylinderförmigen Bereich des Verschlussdeckel (6) eine auf der Unterseite in Richtung des Gewindeprofils (5) an der ringförmigen Verbreiterung (17) anliegende Dichtung (18) angeordnet ist.
